# EUROPÄISCHE PATENTSCHRIFT

(11) **EP 2 205 409 B1**
(45) Veröffentlichungstag und Bekanntmachung des Hinweises auf die Patenterteilung: **30.05.2012**
(21) Anmeldenummer: 08838744.4
(22) Anmeldetag: 17.10.2008
(51) Int. Cl.: B25J 13/08, B25J 9/16

(54) **MANIPULATOR, INSBESONDERE INDUSTRIEROBOTER, MIT EINER REDUNDANZ- SENSORANORDNUNG, UND VERFAHREN ZU DESSEN STEUERUNG**
MANIPULATOR, PARTICULARLY INDUSTRIAL ROBOT, HAVING A REDUNDANT SENSOR ARRANGEMENT, AND METHOD FOR THE CONTROL THEREOF
MANIPULATEUR, EN PARTICULIER ROBOT INDUSTRIEL, DOTÉ D'UN SYSTÈME DE DÉTECTEURS À REDONDANCE ET PROCÉDÉ POUR SA COMMANDE

(30) Priorität: 20.10.2007 DE 102007050232
(43) Veröffentlichungstag der Anmeldung: 14.07.2010
(73) Patentinhaber: KUKA Laboratories GmbH, 86165 Augsburg (DE); Deutsches Zentrum für Luft- und Raumfahrt e.V., 51147 Köln (DE); Hagn, Ulrich, 82396 Pähl (DE)
(72) Erfinder: SCHREIBER, Günter, 86316 Derching (DE)
(74) Vertreter: Patentanwälte Funk & Böss GbR
(86) Internationale Anmeldenummer: PCT/EP2008/064048
(87) Internationale Veröffentlichungsnummer: WO 2009/050271

(56) Entgegenhaltungen:
- EP-A- 0 985 989
- EP-A- 1 445 075
- EP-A- 1 600 833
- DE-B3-102005 054 575

## Beschreibung

Die Erfindung bezieht sich auf einen Manipulator, insbesondere einen Industrieroboter und ein Verfahren zu dessen Steuerung.

Handhabungsroboter, wie Industrieroboter, nach dem Stand der Technik weisen einen Manipulator mit in der Regel zwei bis sechs Bewegungsachsen auf, bei denen es sich in der Regel um rotatorische Bewegungsachsen handelt. Den Bewegungsachsen des Manipulators können jeweils Kraft/Drehmomentsensoren und/oder Positionssensoren zugeordnet sein, mit denen die Position und die Kräfte bzw. die Drehmomente der betreffenden Bewegungsachsen direkt erfasst werden. Die Bewegungsachsen sind in der Regel Gelenke eines mehrgliedrigen Manipulatorarms bzw. ein Drehgelenk zwischen dem Manipulatorarm und der Roboterbasis. An dem freien Ende des Manipulators bzw. des Manipulatorarms ist in der Regel ein Endeffektor, beispielsweise ein Greifer, angeordnet. Neben der reinen Positionssteuerung bzw. -regelung mit Hilfe der den Bewegungsachsen zugeordneten Positionssensoren werden gegebenenfalls Kraft- und/oder Momenten-Sensoren der Bewegungsachsen für eine Kontrolle bzw. eine Steuerung der an dem Manipulatorarm auftretenden Kräfte und Drehmomente eingesetzt.

Die EP 1 600 833 A2 beschreibt ein Verfahren zum Betreiben einer Maschine, wie insbesondere eines Mehrachs-Industrieroboters, bei dem zumindest ein Bahnabschnitt überwacht in einer Referenzfahrt durchfahren wird, wobei bewegungscharakteristische Betriebswerte kontinuierlich gemessen und als Referenzwerte gespeichert werden und im Betrieb der Maschine ebenfalls diese Betriebswerte erfasst und mit den gespeicherten Referenzwerten verglichen werden. Um fehlerhaftes Anlagenverhalten erkennen zu können, wird auch vorgeschlagen, redundante Sensoren anzuwenden. Dabei können Inertialsensoren an allen Strukturelementen des Roboters angebracht sein, um die Werte der roboterinternen Positionsencoder mit einem anderen inertialen Messprinzip überwachen zu können.

Die Kontrolle, Steuerung und Regelung von Drehmomenten und Kräften, die auf den Manipulator wirken, ist bei vielen Anwendungen eine erforderliche oder wenigstens gewünschte Regelungs-Art. Beispielsweise kann der Manipulator über Kraft- und Momenten-Achsensensoren des Manipulators zur Generierung einer bestimmten Kraft oder eines bestimmten Drehmomentes an einem Bauteil gesteuert bzw. geregelt werden. Mit Kraft-und/oder Momenten-Achsensensoren am Manipulator kann bei bewegten Anbau- und/oder Basisbauteilen eine Nachführung des Manipulators zur Vermeidung von Verkantungen realisiert werden. Mit den Kraft- und Momenten-Sensoren des Manipulators können ferner Kollisionen festgestellt werden.

Bei industriellen Anwendungen wird der Industrieroboter in der Regel in einem Automatikbetrieb betrieben. Der Industrieroboter führt mit seinem Manipulator selbständig vorprogrammierte Bewegungsmuster wiederholt aus.

Da eine unmittelbare menschliche Kontrolle im Automatikbetrieb nicht stattfindet, ist eine zuverlässige Funktion aller Steuerungs- und Regelungskreise zur Vermeidung von Fehlinterpretationen der Position und Bewegung des Manipulators unerlässlich.

Über die Manipulator-Achsensensoren kann bei einer Telepräsenz-Steuerung des Manipulators dem Bediener eine Rückmeldung über die auf den Manipulator wirkenden Kräfte gegeben werden. Dieses Verfahren wird im Allgemeinen als Kraftreflexion bezeichnet. Ein mögliches Eingabegerät kann beispielsweise ein sogenannter Joystick sein, der kleine Elektromotoren aufweist, um dem Bediener entsprechende Rückkopplungen über die auf den Manipulator wirkenden Kräfte geben zu können.

Fehlerhafte Messwerte der Kraft- und/oder Momenten-Sensoren des Manipulators können unter Umständen verheerende Auswirkungen haben. So kann beispielsweise ein Sprung eines Drehmoment-Messwertes, der durch einen beschädigten Drehmoment-Sensor verursacht wird, einen Drehmoment-Regler veranlassen, einen entsprechenden Positionssprung anzuordnen.

Hierbei können angesichts der hohen möglichen Beschleunigungen des Manipulators schwere Verletzungen und Beschädigungen durch den außer Kontrolle geratenen Manipulator verursacht werden.

Aufgabe der Erfindung ist es, einen Manipulator bzw. einen Industrieroboter sowie ein geeignetes Steuerverfahren zu schaffen, der bzw. das eine hohe Sicherheit in Bezug auf Fehler der Achsensensoren aufweist.

Diese Aufgabe wird erfindungsgemäß gelöst mit einem Manipulator gemäß Anspruch 1 bzw. einem Industrieroboter gemäß Anspruch 2 bzw. mit einem Steuerungsverfahren gemäß Anspruch 7.

Der erfindungsgemäße Manipulator, bei dem es sich insbesondere um einen Industrieroboter handelt, weist mehrere Bewegungsachsen auf. Jeder Bewegungsachse ist jeweils ein Aktor und mindestens ein Achsensensor zugeordnet. Mittels des Achsensensors kann ein achsenweises Ermitteln von Einzelachs-Werten erfolgen. Ferner weist der erfindungsgemäße Manipulator eine Redundanz-Sensoranordnung zur Ermittlung eines Summenwertes auf. Hierbei wird der Summenwert auf Basis von am Manipulator wirkenden Kräften und/ oder Momenten ermittelt, wobei es sich insbesondere um über den Aktor eingeleitete Kräfte oder Momente handelt.

Bei dem erfindungsgemäßen Manipulator ist zusätzlich zu den Achsensensoren eine mehrachsige Redundanz-Sensoranordnung vorgesehen, die vorzugsweise ausschließlich aus Redundanz-Sensoren darstellenden Kraft-und/oder Drehmoment-Sensoren gebildet ist. Wenngleich es bevorzugt ist, dass die Redundanz-Sensoranordnung mehrere Redundanz-Sensoren aufweist, ist es in einfachen Ausführungsformen auch möglich, dass die Redundanz-Sensoranordnung lediglich einen einzigen Redundanz-Sensor aufweist, der beispielsweise mittels eines einzigen Gebers mehrdimensional Daten erfassen kann.

Die Redundanz-Sensoranordnung erfasst vorzugsweise an einem einzigen Ort des Manipulators mehrachsig die in dem betreffenden Teil auftretenden Kräfte bzw. Drehmomente. Die Redundanz-Sensoranordnung ist insbesondere nicht parallel zu einer Bewegungsachse bzw. einem Achsensensor angeordnet, sondern gewissermaßen in Reihe vor bzw. hinter einem Achsensensor der betreffenden Bewegungsachsen angeordnet. Die Redundanz-Sensoranordnung detektiert die Drehmomente und Kräfte, die zwischen zwei Bewegungsachsen oder zwischen einer Bewegungsachse und der Einspannung bzw. Fixierung einer Roboterbasis übertragen werden.

Die Redundanz-Sensoranordnung ermittelt einen Summenwert aller auf das betreffende Bauteil wirkenden Kräfte, die gleichzeitig achsenweise mit Hilfe der von den Achsensensoren gelieferten Werte als einzelne Summanden ermittelt werden.

Ferner betrifft die Erfindung einen Industrieroboter mit einer Roboterbasis und einem darauf beweglich angeordneten Manipulator mit mehreren Bewegungsachsen. Jeder Bewegungsachse ist ein Aktor und mindestens ein Achsensensor zugeordnet. Ferner ist eine mehrachsige Redundanz-Sensoranordnung vorgesehen, die in besonders bevorzugter Ausführungsform mehrere Redundanz-Sensoren aufweist.

Die Redundanz-Sensoranordnung und damit die Erfassung des Summenwertes, kann grundsätzlich an jedem Ort des Industrieroboters angeordnet sein, also irgendwo zwischen der Fixierung der Roboterbasis und dem Krafteinleitungspunkt. In einer ersten Variante ist die Redundanz-Sensoranordnung in der Roboterbasis vorgesehen bzw. mit dieser verbunden. In einer zweiten Variante der Erfindung ist es nicht zwingend erforderlich, die Redundanz-Sensoranordnung zwischen der Roboterbasis und einem darauf beweglich angeordneten Manipulator anzuordnen. Vielmehr kann die Redundanz-Sensoranordnung auch zwischen zwei beliebigen Achsen der kinematischen Kette angeordnet sein. Hierbei wird bei einer offenen Kinematik von der Redundanz-Sensoranordnung nur die dieser vorgelagerte kinematische Kette überwacht. Dies ist beispielsweise ausreichend, wenn nur die Handachse eines Roboters überwacht werden muss. Ferner ist es möglich, bei einer geschlossenen kinematischen Kette die Redundanz-Sensoranordnung in einer beliebigen Stelle der kinematischen Kette anzuordnen, um die gesamte kinematische Kette überwachen zu können.

Die von der Redundanz-Sensoranordnung ermittelten Kräfte und Drehmomente in dem betreffenden Bauteil des Industrieroboters müssen der Summe der Kräfte bzw. Momente entsprechen, die durch die Achsensensoren direkt oder indirekt ermittelt wurden. Die Redundanz-Sensoranordnung bietet die Möglichkeit, die von den Achsensensoren gelieferten Kraft- und Momentenwerte auf Schlüssigkeit hin zu überprüfen. Auf diese Weise kann ein fehlerhafter Kraft- oder Momentenwert eines Achsensensors sofort festgestellt werden, und eine gefährliche Entgleisung einer entsprechenden Kraft-Momentenregelung des oder der zugeordneten Aktoren rechtzeitig verhindert werden.

Wenn der Industrieroboter als Achsensensoren ausschließlich über Positionssensoren verfügt, lassen sich durch die Erfassung der Kräfte und Drehmomente durch die Redundanz-Sensoranordnung die Messwerte der Positionssensoren auf ihre Plausibilität hin überprüfen. Hierfür ist Voraussetzung, dass die sog. Nutzlast, die die Kräfte und Drehmomente generiert, bezüglich ihrer Größe und ihres Schwerpunktes bekannt ist.

Die Steuerung und Regelung der Aktoren des Industrieroboters beruht weiterhin auf den Messwerten der Achsensensoren, da diese sehr genaue Messwerte liefern. Wird eine unerwartete Abweichung der von der Redundanz-Sensoranordnung erfassten Messwerte von den zu erwartenden Messwerten, die auf Grundlage der Achsensensor-Messwerte ermittelt werden, festgestellt, so kann auf einen Fehler des oder der betreffenden Achsensensoren oder der Redundanz-Sensoranordnung, oder auf eine unerwartete oder erwartete Kollision des Industrieroboter-Manipulators mit der Umgebung geschlossen werden. Durch die Redundanz lässt sich unter Umständen eindeutig feststellen, ob es sich um einen Sensorfehler oder um eine unerwartete bzw. erwartete Kollision handelt. Eine erwartete bzw. gewünschte Kollision des Manipulators kann vorliegen, wenn beispielsweise eine gewünschte Berührung eines durch den Manipulator geführten Werkzeugs mit einem Werkstück erkannt werden soll.

Gemäß einer bevorzugten Ausgestaltung sind die Redundanz-Sensoren der Redundanz-Sensoranordnung drei eindimensionale Kraftsensoren, die an der in Bezug auf den Manipulator ortsfesten Roboterbasis angeordnet sind, die den Manipulator trägt. Besonders bevorzugt sind die drei Kraftsensoren räumlich zueinander angeordnet, beispielsweise kartesisch.

Gemäß dem nebengeordneten Verfahrensanspruch weist das Verfahren zur Steuerung eines Manipulators, insbesondere eines Industrieroboters mit Manipulator, die folgenden Verfahrensschritte auf:
Erfassen eines Achsenwertes durch den Achsensensor,
Erfassen mindestens eines Redundanz-Manipulatorwertes durch die Redundanz-Sensoranordnung,
Abgleichen des Redundanz-Manipulatorwertes und des erfassten Achsensensor-Achsenwertes, und
Ausgabe eines Signals in Abhängigkeit von dem Abgleich-Ergebnis.

Durch das ausgegebene Signal kann eine bestimmte Aktion ausgelöst werden, die beispielsweise von der Signalgröße abhängt. Eine auszulösende Aktion, insbesondere eine im Fehlerfall sicherheitsrelevante Aktion, kann das Überführen des Industrieroboters in einen sogenannten sicheren Zustand sein. Beispielsweise ist ein derartiger sicherer Zustand erreicht, wenn alle Achsbremsen greifen und der Industrieroboter bzw. der Manipulator keine Bewegung mehr ausführt bzw. ausführen kann, also beispielsweise auch ein Durchsacken von Bewegungsachsen durch die Schwerkraft nicht mehr möglich ist.

Bei Feststellung einer gewünschten Kollision bzw. Berührung durch das Abgleichen kann die Zentralsteuerung des Industrieroboters die folgenden Arbeitsschritte, beispielsweise des durch den Manipulator geführten Werkzeugs, auslösen.

Durch die Redundanz-Sensoranordnung bzw. das Steuerungsverfahren kann alternativ oder ergänzend auch eine Lastermittlung bzw. eine Fehllasterkennung durchgeführt werden. In der Robotik werden verschiedene Regelungsverfahren eingesetzt, die als Eingangsgröße u. a. die Masse des Werkzeugs und des Werkstücks erfordern. Hierzu muss der Bediener den Lastwert manuell in die Robotersteuerung eintragen. Mit dem erfindungsgemäßen Industrieroboter bzw. dem erfindungsgemäßen Steuerungsverfahren kann erkannt werden, ob der von dem Bediener eingegebene Lastwert mit der tatsächlich an dem Industrieroboter befindlichen Last übereinstimmt oder davon abweicht. Auf diese Weise können falsch eingegebene Lastwerte erkannt werden und in diesem Fall beispielsweise ein entsprechendes Warnsignal ausgegeben werden. Alternativ kann ohne Eingabe eines Lastwertes durch die Redundanz-Sensoranordnung bzw. das Steuerungsverfahren der tatsächliche Lastwert ermittelt und beispielsweise automatisch in ein Steuerungsprogramm eingetragen werden.

Vorzugsweise ist der Verfahrensschritt des Abgleichens durch folgende Verfahrensschritte gekennzeichnet:
Ermitteln von Redundanz-Achsenwerten aus den Redundanz-Manipulatorwerten, und
Vergleichen der Redundanz-Achsenwerte mit den Achsensensor-Achsenwerten.

Aus den Messwerten der Redundanz-Sensoranordnung werden also Vergleichs-Achsenwerte errechnet, die wiederum mit den unmittelbar durch die Achsensensoren gemessenen Achsensensor-Achsenwerten verglichen werden. Hierzu sind der Achsenanzahl entsprechende Vergleichsoperationen erforderlich. Durch die Errechnung von Redundanz-Achsenwerten für jede Bewegungsachse und den Vergleich mit den durch die Achsensensoren gemessenen Achsenwerten kann festgestellt werden, an welcher Bewegungsachse kritische Abweichungen des Redundanz-Achsenwertes von dem Achsensensor-Achsenwert auftreten, an welcher Bewegungsachse also möglicherweise ein fehlerhafte Achsensensor zu finden ist bzw. in welcher Bewegungsrichtung des Manipulators eine gewünschte oder ungewünschte Kollision stattgefunden hat.

Vorzugsweise ist der Verfahrensschritt des Abgleichens gekennzeichnet, durch folgende Verfahrensschritte:
Errechnen eines Ist-Manipulator-Summenwertes aus den Achsensensor-Achsenwerten, und
Vergleichen des Ist-Manipulator-Summenwertes mit den Redundanz-Manipulatorwert.

Bei dieser Abgleich-Variante ist nur ein einziger Vergleich durchzuführen, nämlich ein Vergleich des Ist-Manipulator-Summenwertes mit dem Redundanz-Manipulatorwert. Diese Variante stellt eine relativ einfache Prüfung der Redundanz dar. Allerdings kann bei diesem Abgleich-Verfahren lediglich festgestellt werden, ob mindestens einer der Achsensensoren nicht funktionsfähig ist. Welcher bzw. welche Achsensensoren nicht funktionsfähig sind, kann hierbei nicht festgestellt werden.

Gemäß einer weiteren bevorzugten Abgleich-Variante ist vorgesehen:
Vergleichen abgespeicherter Soll-Werte mit den erfassten Achsensensor-Achsenwerten und den erfassten Manipulatorwerten.

Bei dieser Auslegung des Abgleichens werden für alle abzuarbeitenden Arbeitsschritte des Industrieroboters und/ oder für jede statische und dynamische Situation des Manipulators in einer Bibliothek die entsprechenden Soll-Achsenwerte und Soll-Redundanz-Manipulatorwerte abgespeichert. Die während des Betriebes des Industrieroboters bzw. des Manipulatorarmes von den Achsensensoren und den Redundanz-Sensoren erfassten Achsenwerte und Redundanz-Manipulatorwerte werden mit den abgespeicherten Soll-Werten kontinuierlich vergleichen und in Bezug auf Abweichungen ausgewertet. Es findet also kein Abgleich der unmittelbar erfassten Achsenwerte mit den unmittelbar erfassten Redundanz-Manipulatorwerten statt. Der Rechenaufwand während des Betriebs des Industrieroboters beschränkt sich auf den Vergleich der abgespeicherten Soll-Werte mit den gerade erfassten Redundanz-Manipulatorwerten.

Dieses Verfahren eignet sich im Wesentlichen für die Abarbeitung stets gleicher Aufgaben in gleicher Geschwindigkeit mit gleichen Massen etc. Die abgespeicherten Soll-Werte können beispielsweise durch Referenzfahrten ermittelt werden. Selbstverständlich können die Soll-Werte auch rechnerisch ermittelt werden.

Grundlage für einen rechnerischen Vergleich zwischen den Messwerten der Redundanz-Sensoranordnung und der Achsensensoren ist die Kenntnis der aktuellen Gelenkpositionen, der genauen Gelenkanordnung, der Manipulatorgelenke sowie der Massenträgheiten der Manipulatorsegmente. Nur mit diesen Werten lässt sich beispielsweise der Einfluss des Manipulator-Eigengewichts herausrechnen und lassen sich im Idealfall Redundanz-Drehmomente für jede Bewegungsachse ermitteln, die dann unmittelbar mit den von den betreffenden Achsensensoren gemessenen Drehmomenten verglichen werden können. Für komplexe nicht wiederholte Aufgaben, beispielsweise eine manuelle Fernsteuerung, muss diese Rechnung im Betrieb stets aufs Neue durchgeführt werden.

Im Folgenden wird anhand der Zeichnungen ein Ausführungsbeispiel der Erfindung näher erläutert.

Es zeigen:
- Fig. 1: einen Industrieroboter mit einer ortsfesten Roboterbasis und einem darauf beweglich angeordneten Manipulator, und

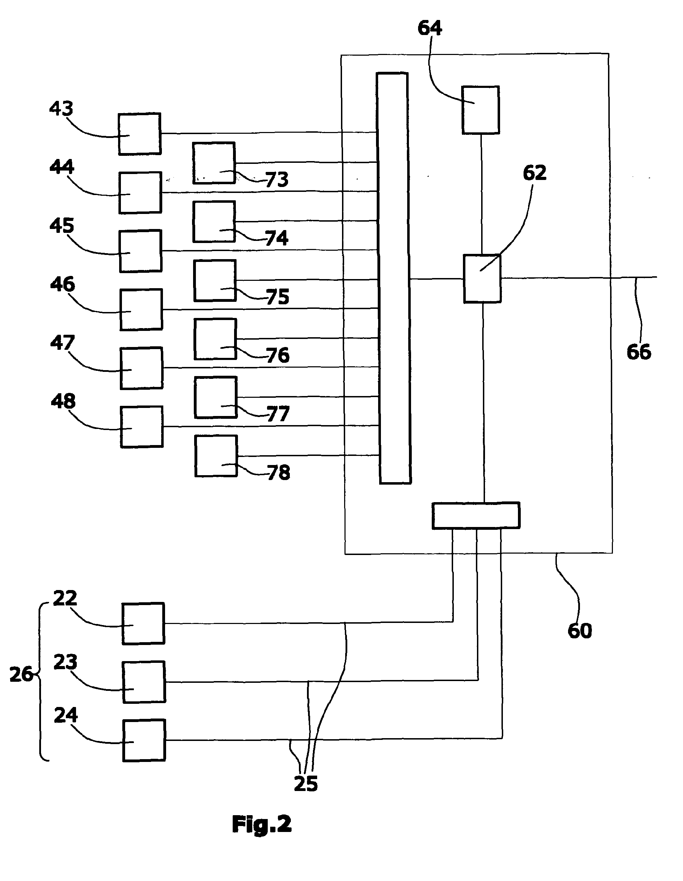

- Fig. 2: eine schematische Darstellung der Kraft- und Momenten-Sensoren des Industrieroboters der Fig. 1, einschließlich einer Robotersteuerung mit einem Redundanz-Modul.

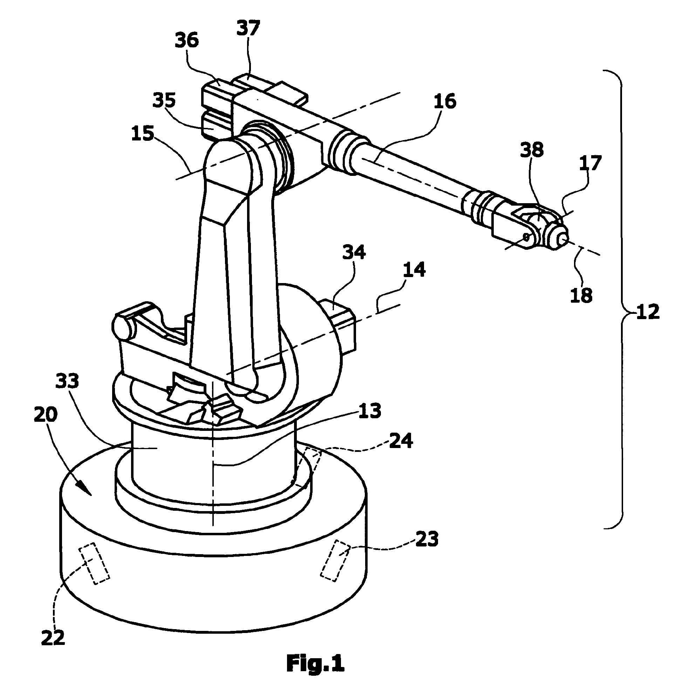

In der Fig. 1 ist ein Industrieroboter 10 dargestellt, der einen Manipulator 12 aufweist, der um eine als Vertikalachse ausgebildete Bewegungsachse 13 drehbar auf einer ortsfesten Roboterbasis 20 steht. Die Roboterbasis 20 kann ihrerseits beweglich auf einem linear oder auf andere Weise beweglichen Portal fixiert sein, kann aber auch ortsfest auf einem Hallenboden oder Ähnlichem fixiert sein. Der vorliegende Industrieroboter 10 wird beispielsweise in der Fahrzeugmontage eingesetzt, kann jedoch grundsätzlich auch für andere Aufgaben eingesetzt werden.

Der Manipulator 12 weist insgesamt 6 rotatorische Bewegungsachsen 13 - 18 auf, die durch als Elektromotoren ausgebildete Aktoren 33 - 38 angetrieben werden. Den Aktoren 33 - 38 sind jeweils in Fig. 1 nicht dargestellte Drehmoment-Sensoren 43 - 48 zugeordnet, die die in den betreffenden Bewegungsachsen 13 - 18 übertragenen Drehmomente detektieren.

Die Achsensensoren 43 - 48 können als separate Drehmoment-Kraftsensoren ausgebildet sein. Es ist alternativ auch möglich, dass das übertragene Drehmoment bzw. die übertragene Kraft aus dem jeweiligen Motorstrom des betreffenden Elektromotor-Aktors 33 - 38 hergeleitet wird und daraus das betreffende Bewegungsachsen- Drehmoment errechnet wird. Zusätzlich sind als Achsensensoren 73 - 78 Positionssensoren vorgesehen, mit denen die rotatorische Position der betreffenden Bewegungsachse 13 - 18 bestimmt wird. Alternativ kann diese Position aus der Anzahl an Motorumdrehungen der betreffenden Aktoren- Motoren hergeleitet werden

In der Roboterbasis 20 sind drei als Kraftsensoren ausgebildete Redundanz-Sensoren 22, 23, 24 angeordnet, die gemeinsam eine Redundanz-Sensoranordnung 26 bilden. Die drei Redundanz-Sensoren 22 - 24 sind als eindimensionale Kraftsensoren ausgebildet und kartesisch, also rechtwinklig zueinander angeordnet. Die Roboterbasis 20 kann beispielsweise aus zwei übereinanderliegenden Scheiben bestehen, die ausschließlich über sehr steife Federkörper miteinander verbunden sind, wobei zwischen den beiden Scheiben die als hochpräzise Wegsensoren ausgebildeten Redundanz-Sensoren 22 - 24 angeordnet sind.

Die Redundanz-Sensoren 22 - 24 sind über eine separate Redundanzleitung 25 mit einer Robotersteuerung 60 verbunden. Ebenso sind die Achsensensoren 43 - 48, 73 - 78 mit der Robotersteuerung 60 über eigene Datenleitungen verbunden. Die Messwerte der Achsensensoren 43 - 48, 73 - 78 und der Redundanz-Sensoren 22 - 24 laufen in einem Redundanz-Modul 62 in der Robotersteuerung 60 zusammen.

Das Redundanzmodul 62 ermittelt beispielsweise aus den Redundanz-Manipulatorwerten der Redundanz-Sensoren 22 - 24 und den Achsenwerten der Achsensensoren 43 - 48, 73 - 78 sowie gegebenenfalls weiteren Sensorwerten und Informationen aus einem Modellspeicher 64 Redundanz-Achsenwerte, die dann in dem Redundanzmodul 62 mit den Achsenwerten verglichen bzw. abgeglichen werden. Schließlich wird über die Ausgabeleitung 66 ein entsprechendes Signal in Abhängigkeit von dem zuvor ausgeführten Abgleich bzw. Vergleich ausgegeben.

Bei weitgehender Übereinstimmung der Redundanz-Achsenwerte mit den Achsensensor-Achsenwerten wird ein Übereinstimmungssignal über die Ausgabeleitung 66 ausgegeben. Bei nicht ausreichender Übereinstimmung wird durch das Redundanzmodul 62 über die Ausgabeleitung 66 ein Fehlersignal ausgegeben und werden hierdurch geeignete Aktionen ausgelöst, beispielsweise eine Sicherheitsschaltung angesteuert. Bei Feststellung einer unzulässigen Abweichung einer Bewegungsachse kann auf einen Sensorfehler eines Achsensensors oder eines oder mehrerer Redundanz-Sensoren geschlossen werden.

Voraussetzung für das zuvor beschriebene Verfahren ist, dass die Robotersteuerung 60 über genaue und sichere Informationen über die Physik des Manipulators verfügt, die in dem Modellspeicher 64 abgespeichert ist. Im einzelnen sind dies Informationen über die Massen und Massenschwerpunkte der Manipulator-Armsegmente, die Lage der Bewegungsachsen etc. Auf Basis dieser Informationen können aus allen ermittelten Messwerten der Sensoren Redundanz-Informationen gewonnen werden.

Alternativ zu dem zuvor beschriebenen Verfahren können aus den Achsensensor-Achsenwerten auch die entsprechenden Ist-Manipulator-Summenwerte errechnet werden, die dann unmittelbar mit den gemessenen Redundanz-Manipulatorwerten verglichen werden.

In dem Modellspeicher 64 können alternativ auch durch sogenannte Einlernfahrten ermittelte Soll-Werte für alle Sensoren und Bewegungsphasen bzw. -situationen abgespeichert sein, die stets mit den durch die Sensoren 43 - 48, 73 - 78, 22 - 24 erfassten Werten unmittelbar verglichen bzw. abgeglichen werden können.

Die Regelung der Manipulator-Bewegungen im Normalbetrieb beruht weiterhin auf den Messwerten, die von den Achsensensoren 43 - 48, 73 - 78 ermittelt werden, da diese Messwerte eine hohe Genauigkeit aufweisen.

Mit den Redundanz-Sensoren 22 - 24 bzw. der Redundanz-Sensoranordnung 26 kann unabhängig von der Überprüfung der Achsensensoren auch die absolute Last ermittelt werden, die auf den Manipulator 12 wirkt, so dass hierdurch auf einfache Weise eine Überlasterkennung und damit ein Überlastschutz realisiert werden kann.

## Patentansprüche

1. Manipulator (12) mit mehreren Bewegungsachsen (13-18), denen jeweils ein Aktor (33-38) und mindestens ein Achsensensor (43-48, 73-78) zugeordnet ist, zur achsenweisen Ermittlung von Einzelachs-Werten, sowie
einer mehrachsigen Redundanz-Sensoranordnung (26), die zur Ermittlung eines Summenwertes aller auf das betreffende Bauteil des Manipulators (12) wirkenden Kräfte und/oder Momente vorgesehen ist, wobei die Achsensensoren (43 - 48, 73 - 78) zur achsenweisen Ermittlung von Werten als einzelne Summanden vorgesehen sind.

2. Industrieroboter (10), mit
einer Roboterbasis (20) und einem darauf beweglich angeordneten Manipulator (12) nach Anspruch 1,
wobei eine mehrachsige Redundanz-Sensoranordnung (26) vorgesehen ist, die mehrere Redundanz-Sensoren (22 - 24) aufweist.

3. Industrieroboter (10) nach Anspruch 2, **dadurch gekennzeichnet, dass** die Redundanz-Sensoren (22 - 24) als Kraftsensoren ausgebildet sind.

4. Industrieroboter (10) nach Anspruch 2 oder 3, **dadurch gekennzeichnet, dass** drei Redundanz-Sensoren (22 - 24) räumlich zueinander angeordnet sind.

5. Industrieroboter (10) nach einem der Ansprüche 2 bis 4, **dadurch gekennzeichnet, dass** die Redundanz-Sensoranordnung (26) an der ortsfesten Roboterbasis (20) angeordnet ist, die den Manipulator (12) trägt.

6. Industrieroboter (10) nach einem der Ansprüche 2 bis 5, **dadurch gekennzeichnet, dass** die Achsensensoren (43 - 48, 73 - 78) als Kraft-, Drehmoment- und/oder Positionssensoren ausgebildet sind.

7. Verfahren zur Steuerung eines Manipulators (12), insbesondere eines Industrieroboters (10) mit einem Manipulator (12), der mehrere Bewegungsachsen (13 - 18) aufweist, denen jeweils ein Aktor (33-38) und mindestens ein Achsensensor (43 - 48, 73 - 78) zugeordnet ist,
wobei der Manipulator (12) eine mehrachsige Redundanz-Sensorenanordnung (26) aufweist, die zur Ermittlung eines Summenwertes aller auf das betreffende Bauteil des Manipulators (12) wirkenden Kräfte und/oder Momente vorgesehen ist, wobei die Achsensensoren (43 - 48, 73 - 78) zur achsenweisen Ermittlung von Werten als einzelne Summanden vorgesehen sind, mit den Verfahrensschritten:
Erfassen von Achsenwerten durch die Achsensensoren (43 - 48, 73 - 78),
Erfassen mindestens eines Redundanz-Manipulatorwertes durch die Redundanz-Sensorenanordnung (26),
Abgleichen des Redundanz-Manipulatorwertes und der erfassten Achsensensor-Achsenwerte, und
Ausgabe eines Signals in Abhängigkeit von dem Abgleich-Ergebnis.

8. Verfahren nach Anspruch 7, **dadurch gekennzeichnet, dass** der Verfahrensschritt des Abgleichens folgende Verfahrensschritte aufweist:
Ermitteln eines Redundanz-Achsenwertes aus dem Redundanz-Manipulatorwert, und
Vergleichen des Redundanz-Achsenwertes mit dem Achsensensor-Achsenwert.

9. Verfahren nach Anspruch 7, **dadurch gekennzeichnet, dass** der Verfahrensschritt des Abgleichens folgende Verfahrensschritte aufweist:
Errechnen eines Ist-Manipulator-Summenwertes aus den Achsensensor-Achsenwerten, und
Vergleichen des Ist-Manipulator-Summenwertes mit dem Redundanz-Manipulatorwert.

10. Verfahren nach Anspruch 7, **dadurch gekennzeichnet, dass** der Verfahrensschritt des Abgleichens folgende Verfahrensschritte aufweist:
Vergleichen eines abgespeicherten Soll-Achsenwertes und/oder abgespeicherten Soll-Redundanz-Sensor-Wertes mit dem jeweils erfassten Achsenwert und erfassten Redundanz-Manipulatorwert.

## Claims

1. Manipulator (12) with several axes of movement (13-18) to which an actuator (33-38) and at least one axis sensor (43-48, 73-78) are assigned respectively for determining individual axis values, and
a multiple axis redundancy sensor arrangement (26), which is provided for determining a summand of all of the forces and/or torques acting on the relevant component of the manipulator (12), wherein the axis sensors (43 - 48, 73 - 78) are provided for determining axis values as individual summands.

2. Industrial robot (10) comprising
a robot base (20) and a manipulator (12) arranged movably thereon according to claim 1,
wherein a multiple axis redundancy sensor arrangement (26) is provided which comprises several redundancy sensors (22 - 24).

3. Industrial robot (10) according to claim 2, **characterised in that** the redundancy sensors (22 - 24) are in the form of power sensors.

4. Industrial robot (10) according to claim 2 or 3, **characterised in that** three redundancy sensors (22 - 24) are arranged spatially relative to one another.

5. Industrial robot (10) according to any one of claims 2 to 4, **characterised in that** the redundancy sensor arrangement (26) is arranged on the stationary robot base (20), which supports the manipulator (12).

6. Industrial robot (10) according to any one of claims 2 to 5, **characterised in that** the axis sensors (43- 48, 73-78) are in the form of power, torque and/or position sensors.

7. Method for controlling a manipulator (12), in particular an industrial robot (10) with a manipulator (12) which has several axes of movement (13-18) to which at least one actuator (33-38) and a least one axial sensor (43-48, 73-78) are assigned respectively,
wherein the manipulator (12) comprises a multiple axial redundancy sensor arrangement (26), which is provided for determining a summand of all of the forces and/or torques acting on the relevant component of the manipulator (12), wherein the axis sensors (43- 48, 73-78) are provided for determining axis values as individual summands, comprising the method steps:
determining axis values by means of the axis sensors (43- 48, 73-78),
determining at least one redundancy manipulator value by means of the redundancy sensor arrangement (26),
adjusting the redundancy manipulator value and the determined axis sensor axis values and
outputting a signal depending on the adjustment result.

8. Method according to claim 7, **characterised in that** the method step of adjusting comprises the following method steps:
determining a redundancy axis value from the redundancy manipulator value and
comparing the redundancy axis value with the axis sensor axis value.

9. Method according to claim 7, **characterised in that** the method step of adjusting comprises the following method steps:
calculating an actual manipulator summand from the axis sensor axis values, and
comparing the actual manipulator summand with the redundancy manipulator value.

10. Method according to claim 7, **characterised in that** the method step of adjusting comprises the following steps:
comparing a saved reference axis value and/or saved reference redundancy sensor value with the respectively determined axis value and detected redundancy manipulator value.

## Revendications

1. Manipulateur (12) comportant plusieurs axes de mouvement (13 - 1'8) auxquels sont associés respectivement un acteur (33 - 38) et au moins un détecteur d'axe (43 - 48, 73 - 78), pour la détermination de valeurs d'axes individuels, axe par axe, ainsi que
un agencement de détecteur à redondance (26) multiaxial qui est prévu pour la détermination d'une valeur cumulée de toutes les forces et/ou couples agissant sur le composant concerné du manipulateur (12), les détecteurs d'axes (43 - 48, 73 - 78) étant prévus pour la détermination, axe par axe, de valeurs en tant que termes individuels d'une somme.

2. Robot industriel (10), comportant
une base de robot (20) et un manipulateur (12) selon la revendication 1, agencé mobile sur ladite base,
un agencement de détecteur à redondance (26) multiaxial étant prévu, lequel présente plusieurs détecteurs à redondance (22 - 24).

3. Robot industriel (10) selon la revendication 2, **caractérisé en ce que** les détecteurs à redondance (22 - 24) sont réalisés sous forme de détecteurs de force.

4. Robot industriel (10) selon la revendication 2 ou 3, **caractérisé en ce que** les détecteurs à redondance (22 - 24) sont agencés les uns par rapport aux autres dans l'espace.

5. Robot industriel (10) selon l'une des revendications 2 à 4, **caractérisé en ce que** le détecteur à redondance (26) est agencé sur la base de robot (20) stationnaire qui porte le manipulateur (12).

6. Robot industriel (10) selon l'une des revendications 2 à 5, **caractérisé en ce que** les détecteurs d'axes (43 - 48, 73 - 78) sont réalisés sous forme de détecteurs de force, de couple et/ou de position.

7. Procédé de commande d'un manipulateur (12), en particulier d'un robot industriel (10) comportant un manipulateur (12), qui présente plusieurs axes de mouvement (13 - 18) auxquels est associé respectivement au moins un détecteur d'axe (43 - 48, 73 - 78),
le manipulateur (12) présentant un agencement de détecteur à redondance (26) multiaxial qui est prévu pour la détermination d'une valeur cumulée de toutes les forces et/ou couples agissant sur le composant concerné du manipulateur (12), les détecteurs d'axes (43 - 48, 73 - 78) étant prévus pour la détermination, axe par axe, de valeurs en tant que termes individuels d'une somme, avec les étapes de procédé suivantes :
détection de valeurs d'axes par les détecteurs d'axes (43 - 48, 73 - 78),
détection d'au moins une valeur de manipulateur à redondance par l'agencement de détecteur à redondance (26),
alignement de la valeur de manipulateur à redondance sur les valeurs d'axes des détecteurs d'axes, et
émission d'un signal en fonction du résultat de l'alignement.

8. Procédé selon la revendication 7, **caractérisé en ce que** l'étape de procédé d'alignement présente les étapes de procédé suivantes :
détermination d'une valeur d'axe à redondance à partir de la valeur de manipulateur à redondance, et
comparaison de la valeur d'axe à redondance avec la valeur d'axe de détecteur d'axe.

9. Procédé selon la revendication 7, **caractérisé en ce que** l'étape de procédé d'alignement présente les étapes de procédé suivantes :
calcul d'une valeur cumulée de manipulateur réel à partir des valeurs d'axe de détecteur d'axe, et
comparaison de la valeur cumulée de manipulateur réel avec la valeur de manipulateur à redondance.

10. Procédé selon la revendication 7, **caractérisé en ce que** l'étape de procédé d'alignement présente les étapes de procédé suivantes :
comparaison d'une valeur d'axe de consigne mémorisée et/ou d'une valeur de détecteur à redondance de consigne avec la valeur d'axe respectivement saisie et la valeur de manipulateur à redondance respectivement saisie.
